# EUROPÄISCHE PATENTSCHRIFT

(11) **EP 0 890 046 B1**
(45) Veröffentlichungstag und Bekanntmachung des Hinweises auf die Patenterteilung: **17.11.1999**
(21) Anmeldenummer: 97908278.1
(22) Anmeldetag: 21.03.1997
(51) Int. Cl.: F16H 61/06

(54) **HYDRAULISCHE STEUERVORRICHTUNG ZUM SCHALTEN EINES AUTOMATIKGETRIEBES, INSBESONDERE EINES CVT-GETRIEBES**
HYDRAULIC CONTROL FOR OPERATING AN AUTOMATIC GEARBOX, ESPECIALLY A CONTINUOUSLY VARIABLE TRANSMISSION
DISPOSITIF DE COMMANDE HYDRAULIQUE POUR LA MANOEUVRE D'UNE TRANSMISSION AUTOMATIQUE, EN PARTICULIER D'UNE TRANSMISSION VARIABLE EN CONTINU

(30) Priorität: 30.03.1996 DE 19612864
(43) Veröffentlichungstag der Anmeldung: 13.01.1999
(73) Patentinhaber: ZF FRIEDRICHSHAFEN Aktiengesellschaft, 88038 Friedrichshafen (DE)
(72) Erfinder: KÖNIG, Hubert, D-88069 Tettnang (DE); STOLL, Hans, Peter, D-88094 Oberteuringen (DE)
(86) Internationale Anmeldenummer: EP9701430
(87) Internationale Veröffentlichungsnummer: WO9737158

(56) Entgegenhaltungen:
- EP-A- 0 309 070
- DE-A- 4 414 804
- US-A- 4 936 430

## Beschreibung

Die Erfindung betrifft eine hydraulische Steuervorrichtung zum Schalten eines Automatikgetriebes, auch eines CVT-Getriebes, mit wenigstens einem ersten und einem zweiten Schaltelement zur Vorwärts- bzw. Rückwärtsfahrt von einer Neutralstellung in eine Vorwärtsfahrtstellung oder eine Rückwärtsfahrtstellung und umgekehrt entsprechend den im Oberbegriff von Anspruch 1 enthaltenen Maßnahmen, die als allgemein bekannt zu gelten haben.

Wie allgemein aus der Praxis bekannt ist, wird bei Automatikgetrieben mit hydraulisch betätigten Schaltelementen, welche üblicherweise einen Schaltkolben aufweisen, der in einem Kolbenraum an ein Lamellenpaket angelegt wird, zur Durchführung einer Schaltung das Schaltelement zunächst mit Öl befüllt, bevor der Schaltkolben definiert an das Lamellenpaket angelegt wird. Wird dieses Schaltelement abgeschaltet, so wird das Druckmittel aus dem Schaltelement abgeführt und das Lamellenpaket wieder entspannt. Der Befüll- und Anlegevorgang eines Schaltelementes weist hierbei zunächst eine Schnellfüllphase auf, in der das fast völlig oder teilweise leergelaufene Schaltelement mit Öl befüllt wird, woran sich eine Füllausgleichsphase anschließt, während der in dem Schaltelement ein Schaltkolben definiert an das Lamellenpaket angelegt wird. Am Ende der Füllausgleichsphase schließt sich eine Druckanstiegsphase an, welche als mit der Zeit ansteigende Druckrampe wiedergegeben werden kann. Während der Druckanstiegsphase bzw. Druckrampe werden die Lamellen entsprechend zusammengepreßt und können ein Drehmoment übertragen bzw. aufnehmen.

Es ist auch allgemein bekannt, daß sich in dem ersten Bereich bis zum Beginn der Druckrampe eine zu einem hydraulischen Anfahrelement des Getriebes gehörende Turbine mit der Leerlaufdrehzahl eines dem Getriebe zugeordneten Motors dreht. Wenn die Druckrampe erreicht wird, geht die Drehzahl der Turbine auf Null zurück und ein Drehmoment wird beispielsweise an die Räder eines Kraftfahrzeuges geleitet, wobei es allgemein zu einem ruckartigen Vorgang kommen kann, welcher in der Regel als störend empfunden wird.

Nach Ende der Druckrampe kann der Druck zur Drehmomentübertragung durch die Schaltelemente weiter gesteigert werden. Diese Drucksteigerung wird entsprechend den Erfordernissen vorgenommen.

Umgekehrt, wenn beispielsweise das Schaltelement geöffnet wird, beginnt sich die Turbine zu drehen, bis die Motorleerlaufdrehzahl erreicht ist. Dabei kann die Turbine in der Regel derart hochlaufen, daß dies wiederum vom Fahrer als leichter Ruck bemerkt wird.

Des weiteren sind aus der Praxis Versuche bekannt, durch möglichst kurze Schaltzeiten den Schaltvorgang komfortabler zu gestalten.

Dies wirft jedoch Fraaen bezüglich der Sicherheit auf, da bei einem zu schnellen Umschalten unter Umständen zwei Schaltelemente gleichzeitig mit Druck beaufschlagt sind, welche gegeneinander arbeiten, was zu einer Blockierung des Getriebes führt. Dies kann zu einer sicherheitskritischen Situation führen, außerdem wird der Schaltkomfort hierbei stark gemindert.

Es ist daher Aufgabe der vorliegenden Erfindung, eine Steuervorrichtung zum Schalten eines Automatikgetriebes von einer Neutralstellung in eine Vorwärtsfahrtstellung oder eine Rückwärtsfahrtstellung und umgekehrt sowie Reversierschaltungen Vorwärtsfahrtstellung - Rückwärtsfahrtstellung und umgekehrt zu schaffen, mit der ein komfortabler, nahezu ruckfreier, schneller und sicherer Schaltvorgang erreicht wird.

Diese Aufgabe wird durch die im Anspruch 1 genannten Merkmale gelöst.

Die erfindungsgemäße Steuervorrichtung ermöglicht es vorteilhafterweise, daß das Umschalten zwischen der Neutralstellung und der Vorwärtsfahrtstellung oder Rückwärtsfahrtstellung und zurück sowie Reversierschaltungen Vorwärtsfahrtstellung - Rückwärtsfahrtstellung und umgekehrt derart komfortabel sind, daß der Schaltvorgang in der Regel von den Insassen eines Kraftfahrzeuges weder durch einen Schaltruck noch durch eine Geräuschbildung bemerkt wird.

Des weiteren kann mit der erfindungsgemäßen Steuervorrichtung der Startpunkt einer Druckrampe bei der Druckbeaufschlagung durch das Dämpferschalt- und Entlüftungsventil konstant gehalten werden.

Die erfindungsgemäße Steuervorrichtung bietet darüber hinaus den Vorteil, daß es möglich ist, Reversierschaltungen Vorwärtsfahrtstellung - Rückwärtsfahrtstellung und umgekehrt sehr schnell zu gestalten, wobei die Schaltelemente gegenseitig derart blockiert werden, daß bei Betätigung eines Schaltelementes andere Schaltelemente automatisch abgeschaltet sind.

Durch eine schnelle Entlüftung der nicht betätigten Schaltelemente kann nämlich vorteilhafterweise verhindert werden, daß ein Betriebszustand eintritt, bei dem zwei Schaltelemente gleichzeitig betätigt sind, d. h. es kann zu keiner Getriebeverspannung bzw. einer Blockierung der Schaltelemente gegeneinander kommen, was zu einem Momentenstoß führen würde.

Damit trägt die erfindungsgemäße Steuervorrichtung erheblich zu einer Erhöhung der Betriebssicherheit eines Fahrzeuges bei.

Die schnelle Entlüftung der Schaltelemente beim Reversieren wird durch eine sehr vorteilhafte Schnellentlüftung des Dämpferraumes der Schaltventile über das Dämpferschalt- und Entlüftungsventil gewährleistet.

Des weiteren läßt sich mit der erfindungsgemäßen Steuervorrichtung der an einem Schaltelement anliegende Druck vorteilhafterweise auch im Betriebszustand entsprechend einem zu übertragenden Drehmoment regeln. Die Steuervorrichtung gemäß der Erfindung ist weiterhin darin vorteilhaft, daß Toleranzen bei der Druckbeaufschlagung der Schaltelemente ausgeglichen werden können.

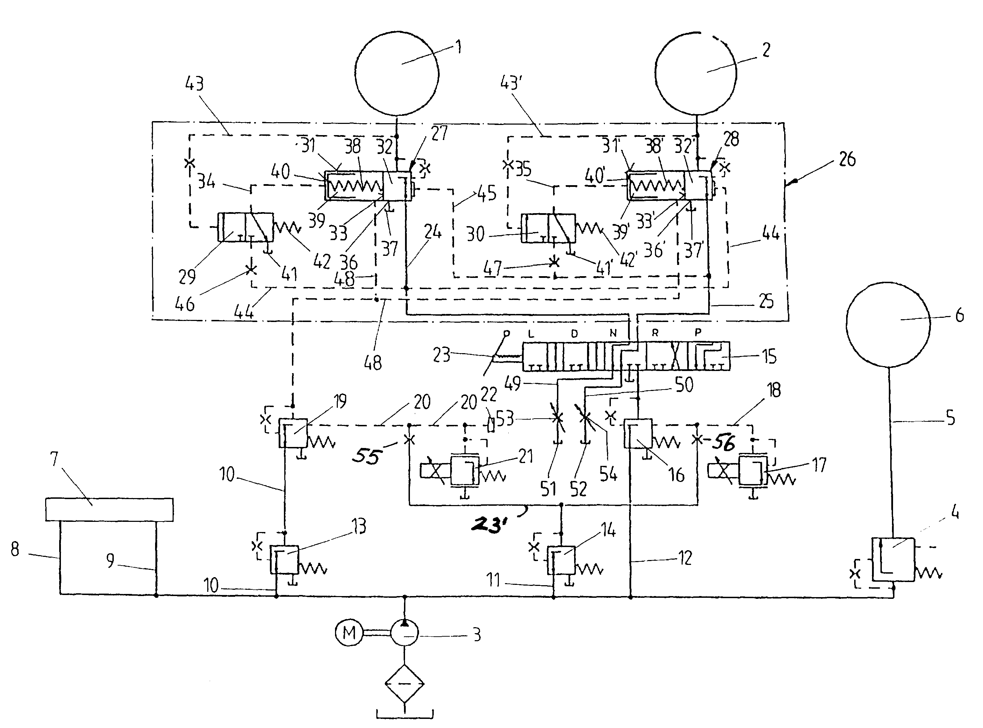

Weitere Vorteile und vorteilhafte Ausgestaltungen der Erfindung ergeben sich aus den Unteransprüchen und dem nachfolgend anhand der Zeichnung beschriebenen Ausführungsbeispiel.

Die Zeichnung zeigt eine Prinzipdarstellung einer erfindungsgmäßen hydraulischen Steuervorrichtung eines Automatgetriebes mit zwei Schaltelementen für Vorwärts- bzw. Rückwärtsfahrt. Auch ein CVT-Getriebe (Continuously Variable Transmission) ist hierbei möglich.

Bezug nehmend auf die Zeichnung ist eine hydraulische Steuervorrichtung eines Automatgetriebes in einem Kraftfahrzeug dargestellt, dessen einzelne Elemente weitgehend von bekannter Bauart sind, weshalb nachfolgend nur auf die wesentlichen Merkmale näher eingegangen wird.

Zum Schalten eines Schaltelementes 1 und eines weiteren Schaltelementes 2, welche in der Zeichnung symbolhaft angedeutet sind, wird einem Hydrauliksystem ein Systemdruck von einer Pumpe 3 zugeführt. Der Systemdruck wird zunächst durch ein erstes Druckbegrenzungsventil 4, welches von einem elektronisch gesteuerten Druckregler angesteuert wird, eingestellt. Über eine Druckleitung 5 ist das Druckbegrenzungsventil 4 mit einem nur symbolhaft angedeuteten hydraulischen Anfahrelement 6 verbunden, dessen Ölversorgung hierdurch gewährleistet wird. Neben dem hydraulischen Anfahrelement 6 werden zudem nur symbolhaft angedeutete Verbraucher 7 über Druckleitungen 8 und 9 mit Systemdruck versorgt.

Über weitere Druckleitungen 10, 11, 12 wird der Systemdruck zum Schalten der Schaltelemente 1 und 2 der Hydraulik zugeleitet, wobei in den Leitungen 10 und 11 jeweils ein Druckreduzierventil 13, 14 angeordnet ist, welches den anstehenden Systemdruck auf einen konstant bleibenden Ausgangswert reduziert, der stets niedriger ist als ein von dem Druckbegrenzungsventil 4 einstellbarer Minimaldruck. In dem vorliegenden Ausführungsbeispiel sind die Ausgangsdrücke der Druckreduzierventile 13 und 14 gleich, sie können jedoch in einem anderen Ausführungsbeispiel selbstverständlich auch unterschiedlich sein.

In der Druckleitung 12, welche zu einem Wählschieber 15 führt, ist ein Kupplungsdruckventil 16 angeordnet, welches das an den Schaltelementen 1 und 2 anliegende Druckniveau regelt. Das Kupplungsdruckventil 16 regelt die Druckbeaufschlagung der Schaltelemente 1 und 2 in Abhängigkeit des anstehenden Drehmomentes. Somit kann über das Kupplungsdruckventil 16 im Betrieb mit einem geschlossenen Schaltelement 1, 2 ein vom Drehmoment abhängiger Druck vorgegeben werden. Dabei wird das Kupplungsdruckventil 16 von einem elektromagnetisch einstellbaren Druckregler 17 beeinflußt, mit dem das Kupplungsdruckventil 16 über eine Druckleitung 18 verbunden ist. Der Druckregler 17 ist als Proportionalventil ausgebildet, welcher über eine Stromzugabe derart betätigt wird, daß zu jeder Stromänderung linear auch eine Änderung des Ausgangsdruckes des Druckreglers 17 erfolgt.

Während eines Druckaufbaus in einem der Schaltelemente 1, 2, der sich entlang einer abstimmbaren Druckrampe mit einer Rampensteigung und einer Rampenlaufzeit vollzieht, bleibt das Kupplungsdruckventil 16 unverändert. Dies gilt, solange beim Schaltvorgang keine Drehmomentänderungen am Motor stattfinden.

Das Kupplungsdruckventil 16 übernimmt während der Fahrt zudem die Aufgabe einer Rückwärtsgangsperre, wobei hierzu vorteilhafterweise keine weiteren Elemente notwendig sind. Hierzu wird beim Verlassen der Vorwärtsfahrtstellung oberhalb einer bestimmten Fahrzeuggeschwindigkeit der Kupplungsdruck abgeschaltet.

Zur Regelung eines Lastventiles 19, an dem über die Druckleitung 10 der Ausgangsdruck des Druckreduzierventiles 13 anliegt, ist dieses über eine Druckleitung 20 mit einem Druckregler 21 verbunden, welcher in seiner konstruktiven Ausgestaltung identisch ist zu dem Druckregler 17, der dem Kupplungsdruckventil 16 zugeordnet ist.

Von der Druckleitung 20, welche den Druckregler 21 mit dem Lastventil 19 verbindet, zweigt eine weitere Druckleitung 22 zur Druckversorgung weiterer, nicht dargestellter Funktionen ab, z. B. zur Einhaltung von bestimmten Druckniveaus in anderen Hydraulikkreisen des Getriebes. Des weiteren ist die Verbindungsdruckleitung 20 zwischen dem Lastventil 19 und dem Druckregler 21 sowie die Verbindungsleitung 18 zwischen dem Kupplungsdruckventil 16 und dem Druckregler 17 jeweils über eine Druckleitung 23' mit dem Druckreduzierventil 14 verbunden, dessen konstanter Ausgangsdruck über die Zulaufblenden 55, 56 in die Druckleitungen 18, 20 eingespeist wird.

Je nach Stellung des Wählschiebers 15 können fünf Schaltpositionen gewählt werden, nämlich die Schaltpositionen D, L zur Vorwärtsfahrt, eine Schaltposition R zur Rückwärtsfahrt, eine Schaltposition N zur Neutralstellung und eine Schaltposition P zur Parkstellung. Der Wählschieber 15 ist dabei über einen Wählhebel 23 manuell betätigbar. In der Zeichnung ist der Wählschieber 15 in Neutralstellung N dargestellt, welche hydraulisch betrachtet gleichbedeutend mit der Parkstellung P ist, da in beiden Schaltstellungen N und P die Schaltelemente 1 und 2 entlüftet sind.

Von dem Wählschieber 15 führt eine Druckleitung 24 zu dem Schaltelement 1 und eine Druckleitung 25 zu dem Schaltelement 2, wobei zwischen den Schaltelementen 1 und 2 und dem Wählschieber 15 eine Schalteinrichtung 26 angeordnet ist, welche für jedes der Schaltelemente 1 und 2 jeweils ein Schaltventil 27 bzw. 28 und ein Dämpferschalt- und Entlüftungsventil 29 bzw. 30 aufweist. Die Schaltstellung der Schaltelemente 1 und 2 wird durch die Position des Wählschiebers 15, durch die Stellung der Schaltventile 27, 28 und die Stellung des Kupplungsdruckventils 16 bestimmt.

Der Wählschieber 15 erfüllt zudem eine Notfunktion, indem er bei einem Ausfall der Stromversorgung der Getriebesteuerung, wenn die Ventile 17, 19 nicht mehr elektrisch ansteuerbar sind, indem die Schaltelemente 1 bzw. 2 weiterhin über die Schaltventile 27, 28 über eine Druckrampe betätigt werden können. Die gegenseitige Verriegelung bleibt hierbei aufrechterhalten. Die Druckbeaufschlagung der Schaltelemente 1, 2 mit einem maximalen Kupplungsdruck wird im Notfall von dem Druckregler 17 und dem damit zusammenwirkenden Kupplungsdruckventil 16 bereitgestellt.

Das dem Schaltelement 1 zugeordnete Schaltventil 27 ist in der Druckleitung 24 und das dem Schaltelement 2 zugeordnete Schaltventil 28 ist in der Druckleitung 25 zwischen dem Schaltelement 1 bzw. 2 und dem Wählschieber 15 zwischengeschaltet. Die Schaltventile 27, 28 weisen jeweils in einem Ventilgehäuse 31, 31' einen verschiebbaren Ventilkolben 33, 33' sowie einen Dämpferkolben 40, 40' und eine Druckfeder 31, 31' auf. Dabei ist der Dämpferkolben 40, 40' mit einem Steuerdruck beaufschlagbar, der über eine Druckleitung 34 bzw. 35 von dem Dämpferschalt- und Entlüftungsventil 29 bzw. 30 in das Schaltventil 27 bzw. 28 gelangt.

Das Ventilgehäuse 31, 31' der Schaltventile 27 und 28 weist jeweils eine Druckmittelzuführung über die Leitungen 24, 25 sowie einen Tankanschluß 37, 37' auf.

Zwischen dem Ventilkolben 33, 33' und dem Dämpferkolben 40, 40' ist in dem Ventilgehäuse 31, 31' eine vorspannbare Feder 38, 38' in einem Arbeitsraum 39, 39' axial beweglich gelagert angeordnet.

Die Druckbeaufschlagung eines Schaltventiles 27 bzw. 28 über das zugehörige Dämpferschalt- und Entlüftungsventil 29 bzw. 30 erfolgt gezielt und zu einem Zeitpunkt, wenn das zugehörige Schaltelement 1 bzw. 2 fast ganz mit Druckmittel befüllt ist. Der Umschaltpunkt des Dämpferschalt- und Entlüftungsventiles 29 bzw. 30 liegt deshalb geringfügig unter einem Fülldruck des zugehörigen Schaltelementes 1 bzw. 2. Der Beginn einer Druckrampe am Schaltelement erfolgt nach Umschaltung des zugehörigen Dämpferschalt- und Entlüftungsventils 29, 30, z. B. wenn der am Schaltelement anliegende Druck etwa 0,2 bis 0,3 bar unter seinem Endfüllwert liegt. Dadurch ist der Druckaufbau für alle einen Betriebszustand beeinflussenden Faktoren, wie beispielsweise Temperatur und Ölviskosität, konstant. Beim Abschalten des betreffenden Schaltelementes 1 oder 2 wird das hinter dem Dämpferkolben 40, 40' anstehende Ölvolumen über das zugehörige Dämpferschalt- und Entlüftungsventil 29 bzw. 30 direkt in einen Tank 41, 41' abgeführt, wodurch eine schnelle Entlüftung gewährleistet ist.

Die Dämpferschalt- und Entlüftungsventile 29, 30 sind in dem Ausführungsbeispiel gemäß der Zeichnung als 3/2-Schieberventile ausgebildet und weisen jeweils eine Feder 42, 42' auf, welche den Umschaltwert des jeweiligen Dämpferschalt- und Entlüftungsventiles 29, 30 derart bestimmt, daß sie einem am Schaltelement 1, 2 anstehenden Druck, der über eine Druckleitung 43, 43' dem Dämpferschalt- und Entlüftungsventil 29 bzw. 30 zugeführt wird, entgegenwirkt. Der Umschaltwert des Ventiles 29 bzw. 30 ist dadurch eine Funktion des Fülldruckes des zugeordneten Schaltelementes. In dem dargestellten Ausführungsbeispiel sind die Federn 42, 42' unterschiedlich ausgebildet und den Betriebsbedingungen angepaßt. In einer anderen Ausführung sind selbstverständlich auch gleichartige Federn einsetzbar.

Um zu verhindern, daß zwei Schaltelemente gleichzeitig betätigt sind, weist die Schalteinrichtung 26 eine Sicherheits- und Entlüftungseinrichtung auf, die gewährleistet, daß bei Betätigung eines der Schaltelemente 1 oder 2 das andere Schaltelement automatisch abgeschaltet ist. Hierzu zweigt von der Druckleitung 24 zwischen dem Wählschieber 15 und dem Schaltventil 27 des ersten Schaltelementes 1 eine Steuerdruckleitung 44 ab, welche einen Steuerdruck auf eine Wirkfläche des Ventilkolbens 33', welches dem nicht gewählten Schaltelement 2 zugeordnet ist, einleitet, wodurch der Ventilkolben 33' des Schaltventiles 28 so weit nach links verschoben wird, daß der Tankabfluß 37' des Schaltventiles 28 geöffnet ist. Dadurch wird Druckmittel aus dem unbetätigten Schaltelement 2 direkt in den Tank 37' abgeführt. Die Druckleitung 44, welche von der Druckleitung 24 abzweigt, ist des weiteren mit dem Dämpferschalt- und Entlüfungsventil 29, 30 des gewählten Schaltelementes 1 verbunden und führt über dieses und die Druckleitung 34 dem Schaltventil 27 derart Druckmittel zu, daß sich der Dämpferkolben 40 des Schaltventiles 27 in einer durch die Zulaufblende 46 bestimmten Zeit nach rechts verschiebt und dadurch die Druckfeder 38 kontinuierlich vorspannt. Aus der kontinuierlich ansteigenden Federkraft auf der linken Seite des Ventilkolbens 33 wird im Zusammenspiel mit dem zurückgeführten Druck des Schaltelements 1, der an einer Wirkfläche auf der rechten Seite des Ventilkolbens 33 angreift, die zum Schalten des Schaltelements notwendige Druckrampe erzeugt. Hierbei wird das Schaltelement 2 automatisch entlüftet.

Ist das Schaltelement 2 angewählt und soll dieses betätigt werden, so erfolgt dessen Druckbeaufschlagung analog und das Schaltelement 1 wird verriegelt.

Somit gewährleistet die Sicherheits- und Entlüftungseinrichtung eine gegenseitige Verriegelung, indem bei Druckbeaufschlagung eines der Schaltelemente 1 oder 2 das Schaltventil des nicht betätigten Schaltelementes gegensinnig mit Druck beaufschlagt wird, so daß bei einem Umschalten eine zwangsweise und schnelle Entlüftung des anderen Schaltelementes erfolgt.

Die Zuführung des Steuerdruckes über die Steuerdruckleitungen 44 und 45 zu dem jeweiligen Dämpferschalt- und Entlüfungsventil 29 bzw. 30 erfolgt dabei gedrosselt über eine Blende 46 bzw. 47, welche die definierte Rampenlaufzeit bestimmt.

In den Arbeitsraum 39, 39' der Feder 38, 38' wird über eine Druckleitung 48 von dem Lastventil 19 der Lastdruck zugeführt.

Aus einem Kräftegleichgewicht an den Schaltventilen 27, 28 läßt sich ermitteln, daß beispielsweise der Druck des Schaltelementes 2 während der Dämpferlaufzeit momentan proportional zu dem Lastdruck des Lastventiles 19 ist. Ebenso ist der an dem Schaltelement 2 anliegende Druck proportional der Federkraft der Feder 38' in dem zu dem Schaltelement 2 gehörenden Schaltventil 28. Dies bedeutet, daß eine Änderung der Vorspannung der Feder 38' einen Anstieg des Druckes in dem zugeordneten Schaltelement 2 zur Folge hat, d. h. eine Wegänderung an der Feder stellt eine Druckänderung bzw. Grundrampe dar. Die Federvorspannung wird entsprechend dem einströmenden Volumen erhöht, womit sich der Druck an dem betreffenden Schaltelement erhöht.

Der vom Lastventil 19 ausgehende Druck ist abhängig von einer Motorlast und wird durch den Druckregler 21 variiert. Das Lastventil 19 wirkt mit seinem Ausgangsdruck über die Druckleitung 48 auf beide Schaltventile 27, 28 bzw. deren Ventilkolben 33, 33'. Dadurch kann die von diesen Schaltventilen erzeugte Druckrampe bei dem zugehörigen Schaltelement 1 bzw. 2 beispielsweise derart verändert werden, daß die Druckrampe mit gleicher Steigung auf einem höheren Druckniveau verläuft. Auf diese Weise werden die Schaltelemente 1, 2 lastabhängig mit Druckmittel versorgt.

Die Entlüftung der Schaltelemente 1, 2 an den Schaltventilen 27, 28 erfolgt beim Reversieren über den jeweiligen Tankanschluß 37, 37'. Beim Zurückschalten aus Vorwärtsposition oder Rückwärtsposition nach Neutral oder Parkstellung erfolgt die Entlüftung des entsprechenden Schaltelements über den Wählschieber 15 und die Entleerblenden 53, 54 in den Tank 51, 52.

Der Beginn der Druckrampe wird durch den von dem jeweiligen Dämpferschalt- und Entlüftungsventil 29 bzw. 30 über die Druckleitung 34 bzw. 35 dem Schaltventil 27 bzw. 28 zugeführten Druck bestimmt. Der Lastdruck des Lastventiles 19 dient dagegen einer Änderung der Druckbeaufschlagung des Ventilkolbens 33, 33' in den Schaltventilen 27, 28, beispielsweise, wenn eine Laständerung durch Gasgeben während der Schaltung auftritt.

Über den Lastdruck des Lastventiles 19 ist ein komfortabler Schaltablauf auch bei einem Schalten von der Neutralstellung N in die Vorwärtsfahrtstellung D bzw. L oder in die Rückwärtsfahrstellung R unter einer Motorteillast darstellbar.

Befindet sich der Wählschieber 15 in der Neutralstellung N oder der Parkstellung P werden beide Schaltelemente 1 und 2 entlüftet, indem das Druckmittel aus den Schaltelementen über den Wählschieber 15 und Druckleitungen 49 bzw. 50 in einen Druckmitteltank 51 bzw. 52 abgeführt wird. Dabei ist zwischen dem Wählschieber 15 und dem Druckmitteltank 51 bzw. 52 eine Entleerblende 53 bzw. 54 angeordnet, welche den Durchflußquerschnitt für das Abfließen des Druckmittels in Abhängigkeit von der Getriebetemperatur einstellt. Entsprechend der höheren Ölviskosität bei niedrigen Temperaturen bzw. geringen Ölviskosität bei hohen Temperaturen verändern die Entleerblenden 53, 54 ihren Querschnitt derart, daß bei geringen Temperaturen große Entleerquerschnitte und bei hohen Temperaturen kleine Entleerquerschnitte eingestellt werden. Durch die temperaturabhängige Verstellfunktion, die durch beliebige temperaturabhängige Einstell- bzw. Verstellglieder (nicht dargestellt) erreicht wird, kann die Entleerzeit der Schaltelemente 1, 2 über den Getriebetemperaturbereich konstant gehalten werden.

Wenn direkt von Vorwärtsfahrt auf Rückwärtsfahrt umgeschaltet wird, erfolgt hingegen keine Verzögerung des Druckabbaus in den Schaltelementen 1, 2 über die Entleerblenden 53, 54, da dies einen Stoß ergeben würde, der die Schaltqualität beeinträchtigt. Hierbei erfolgt die Entleerung der Schaltelemente 1, 2 über die Tankanschlüsse 37, 37' an den Schaltventilen 27 bzw. 28.

## Patentansprüche

1. Hydraulische Steuervorrichtung zum Schalten eines Automatikgetriebes, beispielsweise eines stufenlos arbeitenden Getriebes, mit wenigstens einem ersten und einem zweiten Schaltelement (1, 2), mit denen eine Schaltung aus einer Neutralstellung (N) in eine Vorwärtsfahrtstellung (D) oder Rückwärtsfahrtstellung (R) oder Parkstellung (P) oder weitere Schaltstellungen für Vorwärtsfahrt und umgekehrt erfolgt, und mit einem Hydrauliksystem mit Druckleitungen und mit folgenden Merkmalen:
a) die Schaltelemente (1, 2) sind mit Druck betätigbar, der über Druckleitungen (24, 25) zugeführt wird, welche mit einem Wählschieber (15) und mit einer zwischen dem Wählschieber (15) und den Schaltelementen (1, 2) angeordneten hydraulischen Schalteinrichtung (26) verbunden sind;
b) die Schalteinrichtung (26) weist jeweils ein ein Ventilgehäuse (31, 31') enthaltendes Schaltventil (27, 28) für jeweils ein Schaltelement (1, 2) auf, wobei das Ventilgehäuse (31, 31') des Schaltventiles (27, 28) eine Druckmittelzuführung über die jeweilige Druckleitung (24, 25) sowie einen Tankanschluß (37, 37') aufweist,
**gekennzeichet** durch die weiteren Merkmale:
c) jedem Schaltventil (27, 28) ist ein Dämpferschalt- und Entlüftungsventil (29, 30) zugeordnet;
d) die Schaltventile (27, 28) weisen in dem Ventilgehäuse (31, 31') einen verschiebbaren Ventilkolben (33, 33') sowie einen Dämpferkolben (40, 40') und eine Feder (38, 38') auf, wobei der Dämpferkolben mit einem Steuerdruck beaufschlagbar ist, welcher von dem mit dem Schaltventil (27, 28) verbindbaren Dämpferschalt- und Entlüftungsventil (29, 30) zugeschaltet wird;
e) die Schalteinrichtung (26) weist eine Sicherheits- und Entlüftungseinrichtung auf, welche derart ausgebildet ist, daß bei Betätigung eines der Schaltelemente (1, 2) das andere Schaltelement automatisch abgeschaltet ist.

2. Vorrichtung nach Anspruch 1, dadurch **gekennzeichet** daß die Sicherheits- und Entlüftungseinrichtung derart ausgebildet ist, daß von der jeweiligen Druckleitung (24 bzw. 25) zwischen dem Wählschieber (15) und einem der Schaltventile (27, 28) über eine Steuerdruckleitung (44 bzw. 45) ein Steuerdruck abgeleitet ist, welcher auf eine Wirkfläche des Ventilkolbens (33, 33') des dem nicht gewählten Schaltelement (2 bzw. 1) zugehörigen Schaltventiles (28 bzw. 27) angreift und dessen Ventilkolben (33, 33') derart verschiebt, daß der Tankanschluß (37, 37') geöffnet ist, und welcher in das dem gewählten Schaltelement (1 bzw. 2) zugehörige Dämpferschalt- und Entlüftungsventil (29 bzw. 30) derart mündet, daß der davon mit Druck beaufschlagte Dämpferkolben (40, 40') durch kontinuierliche Vorspannung der Feder (38, 38') die zum Schalten des entsprechenden Schaltelements notwendige Druckrampe erzeugt.

3. Vorrichtung nach Anspruch 1 oder 2, dadurch **gekennzeichet** daß das Schaltventil (27, 28) auf der linken Seite des Ventilkolbens (33, 33') die vorspannbare Feder (38, 38') aufweist, die in einem Arbeitsraum (39, 39') angeordnet ist, welcher an einem Ende der Feder (38, 38') durch den Ventilkolben (33, 33') und an dem anderen Ende der Feder durch den Dämpferkolben (40, 40'), in dem die Feder (38, 38') gelagert und der in dem Ventilgehäuse (31, 31') axial beweglich ist, begrenzt ist.

4. Vorrichtung nach Anspruch 3, dadurch **gekennzeichet** daß die Vorspannung der Feder (38, 38') in dem Schaltventil (27, 28) und die Positionierung des mit der Feder verbindbaren Ventilkolbens (33, 33') derart einstellbar ist, daß auf die rechte Seite des Ventilkolbens (33, 33') der Druck des dem Schaltelement (1, 2) zugeführten Druckmittels und der Steuerdruck aus der Steuerdruckleitung (44, 45) wirkt, und auf der der Feder (38, 38') zugewandten Seite mit einem Druck beaufschlagt ist, der sich zusammensetzt aus einem Druck, der in den Arbeitsraum (39, 39') der Feder (38, 38') über eine Druckleitung (48) von einem Lastdruckventil (19) geführt ist, und aus einem weiteren Druck, der über eine Druckleitung (34, 35) von dem dem jeweiligen Schaltventil (27, 28) zugeordneten Dämpferschalt- und Entlüftungsventil (29, 30) auf der der Feder (38, 38') abgewandten Seite des Dämpferkolbens (40, 40') in das Schaltventil (27, 28) geführt ist.

5. Vorrichtung nach einem der Ansprüche 1 bis 4, dadurch **gekennzeichet** daß das Dämpferschalt- und Entlüftungsventil (29, 30) derart ausgebildet ist, daß das zugeordnete Schaltventil (27, 28) unmittelbar und gezielt bei einem bestimmten Druck des Schaltelementes (1, 2) mit Druckmittel beaufschlagbar ist.

6. Vorrichtung nach einem der Ansprüche 1 bis 5, dadurch **gekennzeichet** daß die Druckmittelzuführung von einer der Steuerdruckleitungen (44, 45) zu dem jeweiligen Dämpferschalt- und Entlüftungsventil (29, 30) über eine Blende (46, 47) gedrosselt ist.

7. Vorrichtung nach einem der Ansprüche 1 bis 6, dadurch **gekennzeichnet**, daß in Neutralstellung (N) und Parkstellung (P) des Wählschiebers (15) Druckmittel aus den Schaltelementen (1, 2) über den Wählschieber (15) und Druckleitungen (49, 50) in einen Druckmitteltank (51, 52) abführbar ist, wobei zwischen dem Wählschieber (15) und dem Druckmitteltank (51, 52) jeweils eine Entleerblende (53, 54) angeordnet ist.

8. Vorrichtung nach Anspruch 7, dadurch **gekennzeichnet**, daß die Entleerblende (53, 54) in Abhängigkeit von der Getriebetemperatur derart verstellbar ist, daß die Entleerzeit der Schaltelemente (1, 2) über einen definierten Getriebetemperaturbereich konstant ist.

9. Vorrichtung nach Anspruch 1 bis 8, dadurch **gekennzeichnet**, daß der über den Wählschieber (15) dem gewählten Schaltelement (1 bzw. 2) zugeleitete Druck von einem Kupplungsdruckventil (16) zugeführt wird, womit im Betrieb bei geschlossenem Schaltelement (1, 2) ein von einem Drehmoment abhängiger Druck vorgebbar ist.

10. Vorrichtung nach Anspruch 9, dadurch **gekennzeichnet**, daß das Kupplungsdruckventil (16) auch als Rückwärtsfahrtsperre vorgesehen ist.

11. Vorrichtung nach Anspruch 9 oder 10, dadurch **gekennzeichnet**, daß der Ausgangsdruck des Kupplungsdruckventils (16) und der Ausgangsdruck eines Lastventils (19) über Druckregler (17, 21), die als elektromagnetisch einstellbare Proportionalventile ausgebildet sind, regelbar sind.

12. Vorrichtung nach nach einem der Ansprüche 1 bis 11, dadurch **gekennzeichnet**, daß das Schalten von der Neutralstellung (N) in die Vorwärtsfahrtstellung (D, L) oder in die Rückwärtsfahrtstellung (R) und umgekehrt durch eine elektronische Ansteuerung elektrisch bestimmt werden kann.

## Claims

1. Hydraulic control apparatus for shifting an automatic transmission, e.g. a constant variable transmission, having at least one first and one second shift element (1, 2) for effecting a shift from a neutral position (N) into a forward drive position (D) or reversing position (R) or parked position (P) or further shift positions for forward drive and vice versa, and having a hydraulic system with pressure lines and having the following features:
a) the shift elements (1, 2) are operable by pressure supplied via pressure lines (24, 25), which are connected to a selector slide valve (15) and to a hydraulic shift device (26) disposed between the selector slide valve (15) and the shift elements (1, 2);
b) the shift device (26) comprises one shift valve (27, 28) with a valve housing (31, 31') for each shift element (1, 2), wherein the valve housing (31, 31') of the shift valve (27, 28) has a pressure medium supply via the respective pressure line (24, 25) and a tank connection (37, 37'),
characterized by the further features:
c) a damper shift and relief valve (29, 30) is associated with each shift valve (27, 28);
d) the shift valves (27, 28) in the valve housing (31, 31') comprise a displaceable valve piston (33, 33') as well as a damper piston (40, 40') and a spring (38, 38'), wherein the damper piston is loadable with a control pressure which is connected to system by the damper shift and relief valve (29, 30) connectable to the shift valve (27, 28);
e) the shift device (26) comprises a safety and relief device, which is designed in such a way that upon operation of one of the shift elements (1, 2) the other shift element is automatically disengaged.

2. Apparatus according to claim 1, characterized in that the safety and relief device is designed in such a way that there is derived from the respective pressure line (24 or 25) between the selector slide valve (15) and one of the shift valves (27, 28) via a control pressure line (44 or 45) a control pressure, which acts upon an effective surface of the valve piston (33, 33') of the shift valve (28 or 27) associated with the non-selected shift element (2 or 1) and displaces its valve piston (33, 33') in such a way that the tank connection (37, 37') is open and which debouches into the damper shift and relief valve (29 or 30) associated with the selected shift element (1 or 2) in such a way that the damper piston (40, 40') pressurized thereby, as a result of continuous preloading of the spring (38, 38'), produces the pressure ramp required for shifting the appropriate shift element.

3. Apparatus according to claim 1 or 2, characterized in that the shift valve (27, 28) at the left side of the valve piston (33, 33') has the preloadable spring (38, 38'), which is disposed in a working chamber (39, 39'), which is delimited at one end of the spring (38, 38') by the valve piston (33, 33') and at the other end of the spring by the damper piston (40, 40'), in which the spring (38, 38') is supported and which is axially movable in the valve housing (31, 31').

4. Apparatus according to claim 3, characterized in that the preloading of the spring (38, 38') in the shift valve (27, 28) and the positioning of the valve piston (33, 33') connectable to the spring (38, 38') are adjustable in such a way that the valve piston (33, 33') at the right side is acted upon by the pressure of the pressure medium supplied to the shift element (1, 2) and by the control pressure from the control pressure line (44, 45) and at the side directed towards the spring (38, 38') is loaded with a pressure composed of a pressure, which is fed into the working chamber (39, 39') of the spring (38, 38') via a pressure line (48) from a load pressure valve (19), and a further pressure, which is fed via a pressure line (34, 35) from the damper shift and relief valve (29, 30) associated with the respective shift valve (27, 28) at the side of the damper piston (40, 40') remote from the spring (38, 38') into the shift valve (27, 28).

5. Apparatus according to one of claims 1 to 4,
characterized in that the damper shift and relief valve (29, 30) is designed in such a way that the associated shift valve (27, 28) is directly and purposefully loadable with pressure means given a specific pressure of the shift element (1, 2).

6. Apparatus according to one of claims 1 to 5,
characterized in that the pressure medium supply from one of the control pressure lines (44, 45) to the respective damper shift and relief valve (29, 30) is throttled by means of a restrictor (46, 47).

7. Apparatus according to one of claims 1 to 6,
characterized in that in neutral position (N) and parked position (P) of the selector slide valve (15) pressure medium is dischargeable from the shift elements (1, 2) via the selector slide valve (15) and pressure lines (49, 50) into a pressure medium tank (51, 52), wherein a discharge restrictor (53, 54) is disposed in each case between the selector slide valve (15) and the pressure medium tank (51, 52).

8. Apparatus according to claim 7, characterized in that the discharge restrictor (53, 54) is adjustable in dependence upon the transmission temperature in such a way that the discharge time of the shift elements (1, 2) over a defined transmission temperature range is constant.

9. Apparatus according to claim 1 to 8, characterized in that the pressure fed via the selector slide valve (15) to the selected shift element (1 or 2) is supplied by a coupling pressure valve (16), with the result that during operation with a closed shift element (1, 2) a pressure dependent upon a torque is preselectable.

10. Apparatus according to claim 9, characterized in that the coupling pressure valve (16) is provided also as a reverse lock-out device.

11. Apparatus according to claim 9 or 10, characterized in that the output pressure of the coupling pressure valve (16) and the output pressure of a load valve (19) are controllable by means of pressure regulators (17, 21), which take the form of electromagnetically adjustable proportional valves.

12. Apparatus according to one of claims 1 to 11, characterized in that the shift from the neutral position (N) into the forward drive position (D, L) or into the reversing position (R) and vice versa may be electrically determined by means of an electronic drive circuit.

## Revendications

1. Dispositif de commande hydraulique pour la manoeuvre d'une transmission automatique, par exemple une transmission variable en continu, comportant au moins un premier et un deuxième élément de commande (1, 2) permettant une commutation à partir d'une position neutre (N) vers une position de marche avant (D) ou une position de marche arrière (R)ou une position de stationnement (P) ou d'autres positions pour marche avant et vice versa, avec un système hydraulique comportant des conduites de pression et ayant les caractéristiques suivantes :
a) les éléments de commande (1, 2) peuvent être actionnés avec de la pression qui est amenée par des conduites de pression (24, 25) lesquelles sont reliées à une vanne de sélection (15) et un dispositif de commande hydraulique (26) agencé entre la vanne de sélection (15) et les éléments de commande (1, 2) ;
b) le dispositif de commande (26) comporte une soupape de commande (27, 28) contenant une boîte à soupape (31, 31') pour chaque élément de commande (1, 2), la boîte à soupape (31, 31') de la soupape de commande (27, 28) comportant une amenée de fluide sous pression au moyen de la conduite de pression (24, 25) correspondante ainsi qu'un raccord au réservoir (37, 37'),
**caractérisé** par les autres caractéristiques suivantes :
c) à chaque soupape de commande (27, 28) est affectée une soupape d'amortisseur et une soupape de purge (29, 30) ;
d) les soupapes de commande (27, 28) comportent dans la boîte à soupape (31, 31') un piston de soupape coulissant (33, 33') ainsi qu'un piston d'amortisseur (40, 40') et un ressort (38, 38'), le piston d'amortisseur pouvant être sollicité par une pression de commande laquelle est mise en circuit par la soupape d'amortisseur et la soupape de purge (29, 30) lesquelles peuvent être reliées à la soupape de commande (27, 28);
e) le dispositif de commande (26) comporte un dispositif de sécurité et de purge qui est conçu de telle façon que lors de l'actionnement d'un des éléments de commande (1, 2) l'autre élément de commande est automatiquement débrayé.

2. Dispositif selon la revendication 1, **caractérisé** en ce que le dispositif de sécurité et de purge est conçu de telle façon qu'à partir de la conduite de pression concernée (24, respectivement 25) entre la vanne de sélection (15) et une des soupapes de commande (27, 28) une pression de commande est dérivée par l'intermédiaire d'une conduite de pression de commande (44, respectivement 45), cette pression de commande agissant sur une surface active du piston de soupape (33, 33') de l'élément de commande non sélectionné (2 respectivement 1) et déplace son piston de soupape (33, 33') de telle manière que le raccord du réservoir (37, 37') est ouvert, et débouchant dans la soupape d'amortisseur et la soupape de purge (29, respectivement 30) correspondantes à l'élément de commande sélectionné (1, respectivement 2) de telle façon que le piston d'amortisseur (40, 40') soumis à pression de ce fait par une précontrainte continue du ressort (38, 38') produit la rampe de pression nécessaire pour la commutation de l'élément de commande correspondant.

3. Dispositif selon la revendication 1 ou 2, **caractérisé** en ce que la soupape de commande (27, 28) présente du côté gauche du piston de soupape (33, 33') le ressort pouvant être soumis à précontrainte (38, 38') agencé dans une chambre de travail (39, 39') qui est limitée d'un côté du ressort (38, 38') par le piston de soupape (33, 33') et de l'autre côté du ressort par le piston d'amortisseur (40, 40') dans lequel est monté le ressort (38, 38') et qui est axialement mobile dans la boîte à soupape (31, 31').

4. Dispositif selon la revendication 3, **caractérisé** en ce que la précontrainte du ressort (38, 38') dans la soupape de commande (27, 28) et le positionnement du piston de soupape (33, 33') pouvant être relié au ressort est réglable de telle façon que sur le côté droit du piston de soupape (33, 33') agit la pression du fluide sous pression amené à l'élément de commande 1, 2) et la pression de commande provenant de la conduite de commande (44, 45) et le côté tourné vers le ressort pouvant être soumis à une pression qui se compose d'une pression amenée par une conduite de pression (48) dans la chambre de travail (39, 39') du ressort (38, 38') par une soupape de pression en charge (19) et d'une autre pression amenée par une conduite de pression (34, 35) par l'intermédiaire de la soupape d'amortisseur et la soupape de purge (29, 30) affectées à la soupape de commande concernée sur le côté opposé au ressort (38, 38') du piston d'amortisseur (40, 40') dans la soupape de commande (27, 28).

5. Dispositif selon l'une des revendications 1 à 4, **caractérisé** en ce que la soupape d'amortisseur et la soupape de purge (29, 30) sont conçues de telle façon que la soupape de commande correspondant (27, 28) peut être sollicitée directement et ponctuellement par le fluide sous pression lorsqu'une certaine pression règne dans l'élément de commande (1, 2).

6. Dispositif selon l'une des revendications 1 à 5, **caractérisé** en ce que l'amenée du fluide sous pression d'une des conduites de pression (44, 45) vers la soupape d'amortisseur et de purge concernée (29, 30) est étranglée par un diaphragme (46, 47).

7. Dispositif selon l'une des revendications 1 à 6, **caractérisé** en ce qu'en position neutre (N) et position de stationnement (P) de la vanne de sélection (15) du fluide sous pression peut être évacué des éléments de commande (1, 2) par l'intermédiaire de la vanne de sélection (15) et les conduites de pression (49, 50) dans un réservoir à fluide sous pression (51, 52), un diaphragme de purge (53, 54) étant agencé entre la vanne de sélection (12) et le réservoir à fluide sous pression (51, 52).

8. Dispositif selon la revendication 7, **caractérisé** en ce que le diaphragme de purge (53, 54) est réglable en fonction de la température de la transmission de telle façon que le temps de purge des éléments de commande (1, 2) est constant sur une plage définie des températures de la transmission.

9. Dispositif selon l'une des revendications 1 à 8, **caractérisé** en ce que la pression amenée par la vanne de sélection (15) à l'élément de commande (1, respectivement 2) est amenée par une soupape de pression d'embrayage (16) et de ce fait, une pression dépendante d'un couple de rotation peut être prédéfinie en fonctionnement avec l'élément de commande (1, 2) fermé.

10. Dispositif selon la revendication 9, **caractérisé** en ce que la soupape de pression d'embrayage (16) est également prévue comme blocage de la marche arrière.

11. Dispositif selon l'une des revendications 9 ou 10, **caractérisé** en ce que la pression de sortie de la soupape de pression d'embrayage (16) et la pression de sortie d'une soupape de charge (19) sont réglables par des régulateurs de pression (17, 21) conçus comme soupapes proportionnelles électromagnétiques.

12. Dispositif selon l'une des revendications 1 à 11, **caractérisé** en ce que la commutation de la position neutre (N) dans la position de marche avant (D, L) ou dans la position de marche arrière (R) et vice versa peut être déterminée électriquement par une excitation électronique.
